# DEMANDE DE BREVET EUROPEEN

(11) **EP 4 813 798 A1**
(43) Date de publication de la demande: **30.09.2026**
(21) Numéro de dépôt: 26160735.2
(22) Date de dépôt: 25.02.2026
(51) Int. Cl.: B62B 5/00, B62B 5/06

(54) **POIGNÉE DE COMMANDE HAPTIQUE**

(30) Priorité: 03.03.2025 FR 2502143
(71) Demandeur: Hublex, 94230 Cachan (FR)
(72) Inventeur: MARTINELLI, Pascal, 92330 SCEAUX (FR); WILLIAMS, Alexis, 94230 CACHAN (FR); LEVY, Jonathan, 92160 ANTONY (FR)
(74) Mandataire: Cabinet Boettcher

(57) **Abrégé**

L'invention est relative à une poignée de commande haptique (200) pour commander le déplacement d'un mobile muni de roues motorisées, comportant une barre de manœuvre (3), deux supports (2) pour recevoir chacune une extrémité (6) de la barre de manœuvre, des capteurs de force portés par les supports et sensibles à la force exercée par l'une des extrémités de la barre lorsqu'un utilisateur exerce une action sur la barre de manœuvre. Selon l'invention, chaque support comporte un logement (7) pour recevoir l'une des extrémités de la barre de manœuvre, les capteurs d'un support étant tous portés par une carte à circuit imprimé (16) rapportée sur le support de façon à former un fond du logement.

## Description

L'invention concerne une poignée de commande haptique pour mobile de type chariot ou similaire, comme un roll, un trolley, un fauteuil roulant, un lit d'hôpital, plus généralement tout objet monté sur roues ou roulettes, susceptible de porter une charge et d'être motorisé.

La manutention des chariots de transport dans les entrepôts est une source de troubles musculo-squelettiques non négligeable. Pour diminuer ces troubles, il a été proposé de motoriser ces chariots, par exemple en remplaçant des roues folles par des roues motorisées. Le chariot est alors muni d'une unité de commande commandant les moteurs des roues de sorte qu'ils assistent le déplacement du chariot quand un organe de manœuvre est sollicité par l'utilisateur, de façon à diminuer fortement l'effort nécessaire pour la mise en mouvement du chariot ou l'arrêt de celui-ci.

En particulier, il apparaît un besoin de pouvoir déplacer le chariot en ligne droite, ou de pouvoir l'orienter à volonté. Il a été proposé dans le document FR3121419 une poignée de commande haptique pour chariot ou similaire équipé de roues motorisées, comportant une barre de manœuvre attelée à deux corps d'épreuve espacés l'un de l'autre et destinés à être solidarisés au chariot, chaque corps d'épreuve comportant des premier et deuxième zones déformables associées à des premier et deuxième capteurs adaptés à engendrer des signaux électrique respectifs en réponse à des déformations des zones déformables du corps d'épreuve lorsque l'utilisateur exerce une action sur la barre de manœuvre. Ces signaux électriques sont exploités par l'unité de commande pour commander les moteurs. Cependant la réalisation de ces corps d'épreuve relativement volumineux est délicate et onéreuse.

L'art antérieur est notamment illustré par le document KR20180067467A.

### OBJET DE L'INVENTION

L'invention a notamment pour but de proposer une poignée de commande haptique simple, compacte, peu onéreuse, et adaptable à l'utilisation visée

### RESUME DE L'INVENTION

A cet effet, on propose une poignée de commande haptique pour commander le déplacement d'un mobile muni de roues motorisées comportant :
- une barre de manœuvre ;
- deux supports pour recevoir chacun une extrémité de la barre de manœuvre, chaque support comporte un logement pour recevoir l'une des extrémités de la barre de manœuvrant ;
- des capteurs de force portés par les supports et sensibles à la force exercée par l'une des extrémités de la barre lorsqu'un utilisateur exerce une action sur la barre de manœuvre.

Selon l'invention, les capteurs d'un support sont tous portés par une carte à circuit imprimé rapportée sur le support au niveau d'une ouverture du logement de sorte les capteurs s'étendent à l'intérieur du logement pour interagir avec l'extrémité de la barre.

Ainsi, les capteurs sont tous regroupés et peuvent être facilement rapportés sur les supports. Pour leur changement, il suffit de désolidariser la carte à circuit imprimé. L'ensemble est très simple à assembler, et ne nécessite pas de corps d'épreuve complexe, ce qui conduit à une poignée compacte et moins onéreuse.

De préférence, le logement du support est traversant, l'extrémité de la barre entrant dans le logement par une ouverture proximale, tandis que la carte à circuit imprimé est rapportée sur le support au niveau d'une ouverture distale de façon à former un fond du logement.

Selon un aspect particulier de l'invention, les capteurs de force sont reçus de manière amovible sur les cartes à circuit imprimé. Cette disposition permet d'installer facilement les seuls capteurs utiles à l'application envisagée.

Selon un aspect particulier de l'invention, au moins l'une des cartes à circuit imprimé comporte un microcontrôleur programmé pour, lors d'une mise sous tension, identifier les capteurs de force installés sur les cartes à circuit imprimé.

Selon un aspect particulier de l'invention, un des capteurs de force a une partie sensible en appui contre la carte à circuit imprimé pour être sensible à une action sur la barre de manœuvre selon un axe longitudinal de celle-ci, ou en appui contre un flanc du logement pour être sensible à une action sur la barre de manœuvre selon un axe transversal de celle-ci.

Selon un aspect particulier de l'invention, au moins une extrémité de la barre de manœuvre comporte des plots en caoutchouc naturel ou synthétique (élastomère) s'étendant en regard des capteurs de force.

Selon un aspect particulier de l'invention, l'extrémité de la barre de manœuvre est conformée en téton de sorte que les plots s'étendent dans des cavités ménagées dans le téton pour saillir d'une face distale et de faces latérales du téton.

Selon un aspect particulier de l'invention, la barre de manœuvre comporte un tube de préhension monté tournant selon un axe longitudinal de la poignée. !!

Selon un aspect particulier de l'invention, une bague est enfilée sur le téton, la bague comportant une collerette s'étendant en regard d'une face du support pour délimiter une course longitudinale de la barre dans les supports et des facettes latérales s'étendant en regard de flancs du logement du support pour délimiter une course latérale de la barre dans les supports.

Selon un aspect particulier de l'invention, l'une des cartes à circuit imprimé comporte un émetteur infrarouge pour émettre un rayonnement infrarouge en direction d'un récepteur infrarouge porté par l'autre des cartes à circuit imprimé, les rayonnements s'étendant parallèlement à la barre de manœuvre pour être interrompu par la main de l'utilisateur quand celui-ci saisit la barre de manœuvre.

Selon un aspect particulier de l'invention, les supports ont la forme d'équerre et sont rapportés sur une base, la poignée étant solidarisé au mobile par la base.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
[Fig. 1] La figure 1 est une vue en perspective schématique d'un chariot muni d'une poignée de commande haptique horizontale selon l'invention ;
[Fig. 2] La figure 2 est une vue en perspective schématique d'un chariot muni de deux poignées de commande haptiques verticales selon l'invention ;
[Fig. 3] La figure 3 est une vue en perspective d'une poignée de commande haptique selon un mode particulier de réalisation de l'invention utilisée en position horizontale ;
[Fig. 4] La figure 4 est une vue en perspective éclatée de la poignée de commande haptique de la figure 3 ;
[Fig. 5] La figure 5 est une vue en perspective éclatée agrandie d'une partie de la poignée de commande haptique de la figure 3 ;
[Fig. 6] La figure 6 est une vue analogue à elle de la figure 5, les capteurs ayant été représentés en place sur leur carte à circuit imprimé ;
[Fig. 7] La figure 7 est une vue analogue à elle de la figure 6, l'embout de la barre de manœuvre étant représenté en position en regard des capteurs ;
[Fig. 8] La figure 8 est une vue en perspective partielle de l'embout de la barre de manœuvre de la poignée de la figure 1 avec une bague selon une variante de réalisation de l'invention ;
[Fig. 9] La figure 9 est une vue en perspective partielle de l'embout de la barre de manœuvre de la poignée de la figure 1 avec une bague selon une autre variante de réalisation de l'invention ;
[Fig. 10] La figure 10 est une vue en perspective éclatée partielle d'une poigne haptique selon une variante de réalisation de l'invention ;
[Fig. 11] La figure 11 est une vue en perspective partielle de la poignée haptique de la figure 10 ;
[Fig. 12] La figure 12 est une vue en perspective d'une poignée de commande haptique selon l'invention utilisée en position verticale ;
[Fig. 13] La figure 13 est une vue en perspective d'une pluralité de poignées de commande haptiques selon l'invention reliées en série.

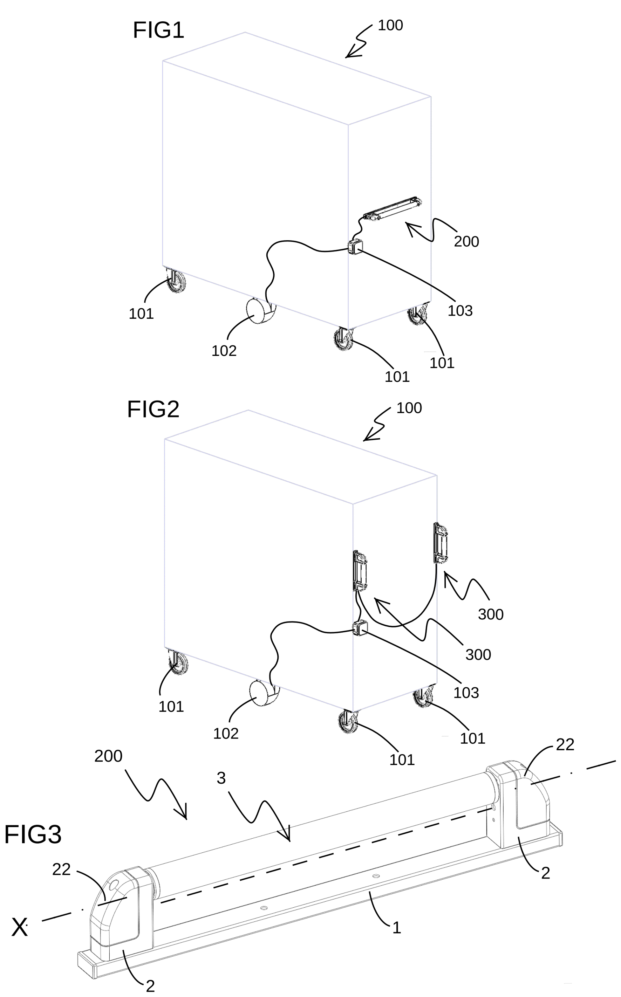

Sur les figures 3 à 9, la poignée horizontale a été redressée pour plus de clarté, mais sa position en service est celle illustrée à la figure 1.

### DESCRIPTION DETAILLEE DE L'INVENTION

Comme illustré aux figures 1 et 2, l'invention est relative à une poignée de commande haptique destinée à équiper un mobile, ici un chariot 100 (figuré par un parallélépipède) équipé ici de roues folles 101 et de deux roues motorisées 102 (seule l'une d'elle est visible sur les figures). Sur la figure 1, le chariot 100 est équipé d'une poignée de commande haptique 200 selon l'invention disposée ici horizontalement. La poignée de commande haptique 200 est reliée à une unité de commande 103 (par exemple par une liaison filaire, un bus CAN...) pour commander les roues motorisées 102 en fonction des actions qu'exerce l'utilisateur sur la poignée de commande haptique horizontale 200. Sur la figure 2, on aperçoit le chariot 100 muni de deux poignées haptiques 300 selon l'invention, disposées ici verticalement. Les deux poignées haptiques verticales 300 sont reliées entre elles et à l'unité de commande 103.

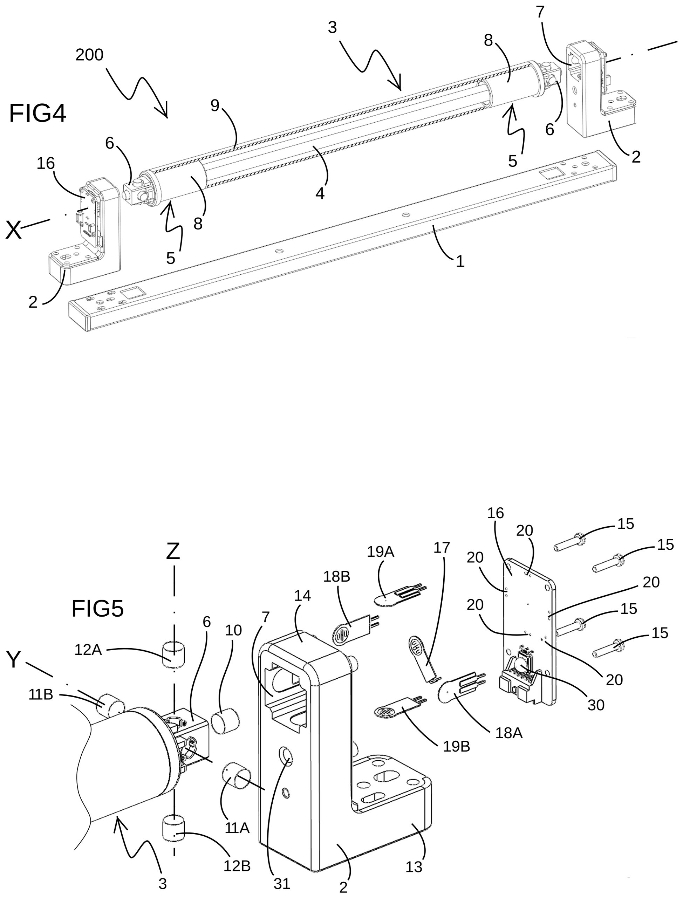

Les figures 3 et 4 illustrent une poignée de commande haptique 200 disposée horizontalement telle qu'illustrée à la figure 1. La poignée 200 comporte une base 1 sur laquelle sont rapportées deux supports prenant ici la forme d'équerres 2. Les équerres 2 portent une barre de manœuvre 3 destinée à être prise en main et actionnée par un opérateur. La poignée de commande haptique 200 est solidarisée au chariot 100 par sa base 1.

La barre de manœuvre 3 est ici constituée d'un barreau 4 de section carrée aux extrémités duquel sont rapportés des embouts 5. Chaque embout 5 comporte un téton 6 de section carrée qui est reçu dans un logement 7 de l'une des équerres 2, ainsi qu'un guide cylindrique 8 recevant avec jeu un tube de préhension 9 (ici représenté coupé) de sorte que ce dernier est libre de tourner autour d'un axe longitudinal X de la barre de manœuvre 3. Comme visible à la figure 5, chaque téton 6 comporte des cavités pour recevoir cinq plots en caoutchouc naturel ou synthétique dont :
- un premier plot 10 s'étendant selon l'axe longitudinal X saillant d'une face distale du téton 6 ;
- des deuxièmes plots 11A,11B s'étendant selon un axe transversal Y orthogonal à l'axe X et saillant chacun de faces latérales opposées du téton 6 ;
- des troisièmes plots 12A,12B s'étendant selon un axe transversal Z orthogonal aux axes X et Y et saillant chacun de faces latérales opposées du téton 6.

Ici, chaque plot a une longueur de l'ordre de quelques millimètres, et une course de déformation utile de l'ordre du millimètre.

Chaque équerre 2 comporte un pied 13 fixé sur la base 1 et une aile 14 dans laquelle s'étend le logement 7 traversant pour recevoir l'un des tétons 6 de la barre de manœuvre engagé par une face avant de l'aile 14. Des vis 15 maintiennent une carte à circuit imprimé 16 rapportée contre une face arrière de l'aile 14 de sorte à fermer le logement 7 et former un fond de ce dernier. La carte à circuit imprimé 16 porte cinq capteurs de force (par exemple du type résistif, ou encore piézoélectrique) comportant chacun une partie sensible et une partie de connexion dont :
- un premier capteur de force 17 dont la partie sensible s'étend en regard du premier plot 10, en s'appuyant contre la carte à circuit imprimé 16 pour être sensible à un appui du premier plot 10 selon une direction d'action parallèle à l'axe longitudinal X ;
- des deuxièmes capteurs de force 18A,18B dont la partie sensible s'étend en regard des deuxièmes plots 11A,11B, en s'appuyant contre les flancs du logement 7 pour être sensible à des appuis des deuxièmes plots 11A,11B selon une direction d'action parallèle à l'axe transversal Y ;
- des troisièmes capteurs de force 19A,19B dont la partie sensible s'étend en regard des troisièmes plots 12A,12B, en s'appuyant contre les flancs du logement 7 pour être sensible à des appuis des troisièmes plots 12A,12B selon une direction d'action parallèle à l'axe transversal Z.

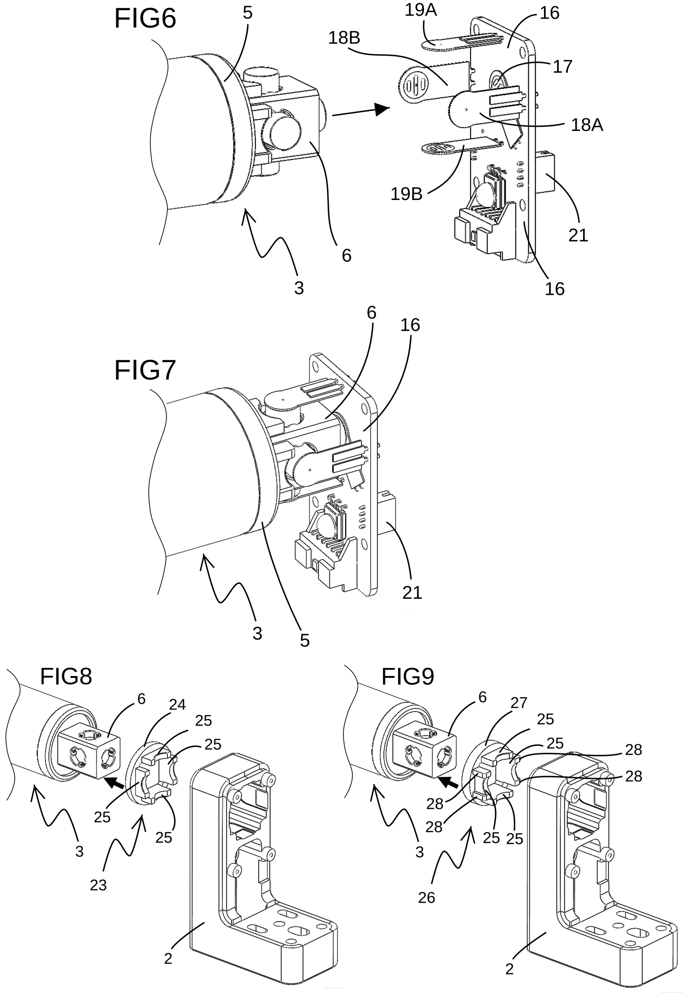

Selon un aspect particulier de l'invention, les capteurs de force 17,18A,18B,19A,19B comportent des broches qui sont reçues ici de façon amovible dans des orifices 20 conformes de la carte à circuit imprimé 16. Les capteurs de force peuvent ainsi être installés à la demande, ainsi que cela sera détaillé plus loin. Sur la figure 6, on aperçoit les capteurs de force 17,18A,18B,19A,19B en place sur la carte à circuit imprimé 16. On constate que la partie sensible du premier capteur de force 17 est directement en appui contre la carte à circuit imprimé, tandis que les autres capteurs de force 18A,18B,19A,19B ont leur partie sensible qui s'étendent pour venir en appui contre les parois internes du logement 7 de l'équerre 2. La figure 7 montre le téton 6 portant les plots 10,11A,11B,12A,12B inséré entre les capteurs de force 17,18A,18B,19A,19B. Le tout est bien entendu reçu dans le logement 7 de l'équerre 2, non représenté ici.

Au moins l'une des cartes à circuit imprimé 16 porte un microcontrôleur 21 programmé pour identifier, lors de la mise sous tension, quels capteurs de force ont été effectivement installés sur chacune des cartes à circuit imprimé 16 portées par les deux équerres 2. Les deux cartes à circuit imprimé 16 sont ici reliées par des fils de connexion (non représentés) courant à l'intérieur de la base 1. Un connecteur (non représenté) permet de relier la poignée 200 à l'unité de commande 103, par exemple au moyen d'un bus CAN.

Les équerres 2 sont recouvertes par des carénages 22 (visibles à la figure 3) qui protègent les cartes à circuit imprimé 16.

Lors de l'utilisation de la poignée de commande 200 selon l'invention, l'utilisateur saisit la barre de manœuvre 3 par le tube de préhension 9 et exerce sur la barre des efforts conduisant à presser au moins l'un des plots 10,11A,11B,12A,12B contre le capteur de force associé 17,18A,18B,19A,19B de sorte que celui-ci génère un signal électrique représentatif de la force exercée. Les signaux des capteurs de force sont transmis à l'unité de commande 103 qui commande l'alimentation les moteurs équipant les roues motorisées 102 du chariot 100 pour déplacer celui-ci en fonction des actions de l'utilisateur sur la poignée.

La poignée de l'invention est particulièrement simple de conception et facile à configurer. Si l'on veut capter uniquement les efforts de traction ou de poussée sur la barre de manœuvre 3 selon l'axe transversal Z, on équipera les cartes à circuit imprimé 16 uniquement des deuxièmes capteurs 19A,19B. Si l'on veut capter uniquement les efforts latéraux sur la barre de manœuvre selon l'axe transversal Y, on équipera les cartes à circuit imprimé 16 uniquement des troisièmes capteurs 18A,18B. Enfin, si l'on veut capter uniquement les efforts longitudinaux sur la barre de manœuvre selon l'axe longitudinal X, on équipera les cartes à circuit imprimé 16 uniquement du premier capteur 17. On pourra bien entendu réaliser toute combinaison de ces trois possibilités. On pourra le cas échéant n'équiper de capteurs que l'une des deux cartes à circuit imprimé 16. Ainsi, il est facile de proposer des poignées de commande haptiques adaptées à la captation d'effort selon des directions déterminées.

Il importe de contrôler finement les courses de déformation des plots 10,11A,11B,12A,12B en appui contre les parties sensibles des capteurs de force 17,18A,18B,19A,19B, et éviter tout écrasement de ces parties sensibles. A cet effet, et selon un aspect particulier de l'invention visible à la figure 8, on rapporte sur chacun des embouts 5 une bague 23 enfilée sur le téton 6. La bague 23 est mise en place sur le téton 6 et comporte un orifice central, ici de section carrée pour son engagement à ajustement sur le téton 6. La bague 23 présente une collerette 24 destinée à venir buter contre la face avant de l'équerre 2 et qui permet de limiter le déplacement longitudinal de la barre de manœuvre 3. A l'état de repos, les premiers plots 10 sont complètement détendus, avec un jeu de quelques dixièmes de millimètres entre les premiers plots 10 et les parties sensibles de premiers capteurs de force 17. L'utilisateur peut alors solliciter longitudinalement la barre de manœuvre 3, déformant l'un des premiers plots 10 contre la partie sensible du premier capteur 17 en regard. L'épaisseur de la collerette 24 de la bague 23 est déterminée pour permettre une déformation du plot de l'ordre du millimètre avant que la collerette 24 ne vienne en contact contre la face avant de l'équerre 2. L'épaisseur de la collerette 24 délimite ainsi une course longitudinale utile de la barre de manœuvre 3 relativement aux équerres 2 qui permet de protéger le capteur des surcharges. La bague 23 comporte par ailleurs des facettes 25 s'étendant parallèlement deux à deux et qui sont engagées dans le logement 7 de l'équerre 2. La distance entre des faces externes de deux facettes 25 parallèles est choisie de sorte à permettre une déformation des deuxièmes et troisièmes plots 11A,11B,12A,12B contre les deuxièmes et troisièmes capteurs de force 18A,18B,19A,19B de l'ordre du millimètre avant que les facettes ne viennent en contact contre les flancs du logement 7. Cette distance délimite ainsi une course latérale utile de la barre de manœuvre 3 relativement aux équerres 2.

A la figure 9, on a représenté une bague 26 adaptée à une poignée sur laquelle seuls les troisièmes plots 12A,12B et les troisièmes capteurs de force 19A,19B seront montés. A cet effet, la bague 26 a une collerette 27 plus épaisse pour empêcher tout mouvement longitudinal de la barre de manœuvre 3 vis-à-vis des équerres 2. De même, deux des facettes 25 comportent des arêtes 28 qui s'étendent pour empêcher tout mouvement transversal selon l'axe transversal Y de la barre de manœuvre 3 vis-à-vis des équerres 2. La bague 26 est ainsi adaptée à une poignée de commande haptique selon l'invention sensible uniquement à des actions de l'utilisateur selon l'axe transversal Z.

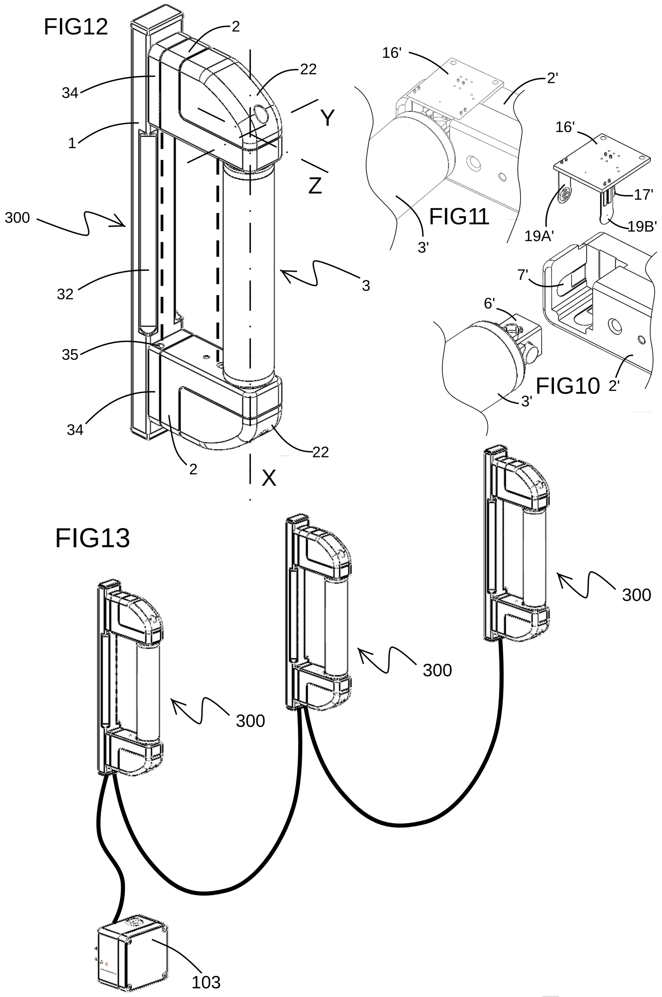

Sur l'exemple illustré sur les figures 3 à 9 le logement 7 de l'équerre 2 est traversant, l'extrémité 6 de la barre de manœuvre 3 étant introduite par une ouverture proximale du logement 7 tandis la carte à circuit imprimé 16 étant disposée sur l'équerre 2 au niveau d'une ouverture distale de façon à former un fond du logement 7. Cependant d'autres dispositions sont possibles. Sur une variante de l'invention illustrée aux figures 10 et 11, l'équerre 2' comporte un logement 7' qui n'est plus traversant. Il comporte une ouverture frontale pour recevoir l'extrémité 6' de la barre de manœuvre 3', et une ouverture latérale permettant aux capteurs de force 17',19A',19B' portés par la carte à circuit imprimé 16' de pénétrer dans le logement 7' lorsque la carte à circuit imprimé 16' est rapportée sur l'équerre 2' au niveau de cette ouverture latérale comme illustré à la figure 11. Ici les capteurs 17',19A',19B' viennent prendre appui contre les parois du logement 7' lors d'une action de l'utilisateur sur la poignée de manœuvre 3'.

Pour prévenir tout risque d'accident, notamment dû à un défaut de capteur qui se mettrait à émettre un signal alors que l'utilisateur n'a pas la main sur la barre de manœuvre 3, la poignée de commande haptique de l'invention est avantageusement équipée d'un dispositif de sécurité comprenant, ainsi que cela est visible à la figure 5, un émetteur infrarouge 30 porté par l'une des cartes à circuit imprimé 16 pour émettre au travers d'un orifice 31 de l'équerre 2 qui porte cette carte. L'autre équerre 2 comporte le même orifice pour permettre au rayonnement infrarouge d'arriver jusqu'à un récepteur infrarouge (non illustré ici) porté par l'autre carte à circuit imprimé 16. On a figuré le rayonnement infrarouge en pointillés le long de la barre de manœuvre 3 à la figure 3. Si le récepteur reçoit le rayonnement infrarouge, c'est le signe que l'utilisateur n'a pas la main sur la barre de manœuvre 3. Si par contre le récepteur ne reçoit pas le rayonnement infrarouge, c'est que le rayonnement infrarouge est bloqué par la main de l'utilisateur ce qui permet de confirmer que l'utilisateur a la main sur la barre de manœuvre 3. L'unité de commande 103 exploite l'information d'interruption du rayonnement infrarouge pour autoriser les déplacements du chariot 100. Il les interdit à chaque fois que le rayonnement infrarouge est reçu par le récepteur.

La poignée de commande haptique de l'invention peut être utilisée selon toute orientation. La figure 12 montre une poignée de commande haptique 300 selon l'invention montée verticalement sur le chariot 100. La poignée de commande haptique 300 reprend les mêmes éléments que la poignée de commande haptique horizontale. On retrouve la base 1, les équerres 2 recouvertes par les carénages 22, ainsi que la barre de manœuvre 3. Le fait que le tube de préhension 9 soit tournant facilite la conduite du chariot, notamment dans les virages. Cependant, divers essais ont permis d'identifier un risque de coincement de la main de l'utilisateur alors que la main tourne avec le tube de préhension 9 de la barre de manœuvre 3 pour venir se coincer entre celle-ci et la base 1. Pour éviter ce risque, on a d'une part modifié la base 1 pour qu'elle présente un chanfrein 32 sur une arête de celle-ci contre laquelle la main de l'utilisateur pourrait se coincer, afin d'éviter toute blessure de la main. On a d'autre part intercalé des entretoises 34 entre les équerres 2 et la base 1 pour augmenter l'espace entre la barre de manœuvre 3 et la base 1. Par ailleurs, on a équipé l'une des entretoises 34 d'un émetteur infrarouge (non visible) émettant à travers un orifice 35 pour émettre un récepteur équipant l'autre entretoise 34. L'émetteur et le récepteur sont reliés aux cartes 16 adjacentes. On a illustré à la figure 10 le rayonnement infrarouge entre les entretoises 34 en pointillés. Si ce rayonnement est interrompu, c'est le signe que la main de l'utilisateur s'est approchée dangereusement de la base 1. Cette information est alors utilisée par l'unité de commande 103 pour stopper le chariot pour laisser à l'utilisateur la possibilité de retirer sa main de la barre de manœuvre 3 et la repositionner en toute sécurité.

Selon un aspect particulièrement avantageux de l'invention illustré à la figure 13, plusieurs poignées haptiques selon l'invention (en nombre arbitraire) équipant un même chariot sont reliées entre elles en série par toute liaison électrique (ici un bus CAN), la dernière étant reliée à l'unité de commande 103. L'unité de commande 103 et les poignées de commande haptiques sont programmées pour s'autoconfigurer en reconnaissant automatiquement le nombre de poignées, leur orientation, et le nombre de capteurs équipant chaque poignée, chaque capteur étant alors identifié par l'unité de commande 103. L'équipement d'un chariot avec plusieurs poignées de commande haptiques de l'invention en est donc grandement facilité.

Bien entendu, l'invention n'est pas limitée au mode de réalisation décrit mais englobe toute variante entrant dans le champ de l'invention telle que définie par les revendications.

En particulier, bien que les supports recevant les extrémités de la barre de manœuvre prennent ici la forme d'équerre, ils pourront de façon générale prendre toute forme, du moment qu'ils comportent un logement pour recevoir une extrémité de la barre de manœuvre muni d'une ouverture pour introduire dans le logement les capteurs de force portés par la carte à circuit imprimé.

Bien que les poignées de commande haptiques illustrées ici comportent une base, on pourra se passer de base et monter directement les équerres 2 sur le mobile.

Bien qu'ici on utilise des plots en caoutchouc naturel ou synthétique pour venir appuyer sur les capteurs de force et protéger la surface de ces derniers contre les surcharges, on pourra faire appuyer directement les extrémités de la barre de manœuvre sur les capteurs de force.

Bien qu'ici les capteurs de force soient reçus de façon amovible sur la carte à circuit imprimé associée, ils pourront y être solidarisés définitivement, par exemple par soudage.

## Revendications

1. Poignée de commande haptique (200;300) pour commander le déplacement d'un mobile muni de roues motorisées (102), comportant
- une barre de manœuvre (3) ;
- deux supports (2) pour recevoir chacune une extrémité (6) de la barre de manœuvre, chaque support comportant un logement (7;7') pour recevoir l'une des extrémités de la barre de manœuvre ;
- des capteurs de force (17,18A,18B,19A,19B) portés par les supports et sensibles à la force exercée par l'une des extrémités de la barre lorsqu'un utilisateur exerce une action sur la barre de manœuvre ;
**caractérisé en ce que** les capteurs d'un support sont tous portés par une carte à circuit imprimé (16;16') rapportée sur le support au niveau d'une ouverture du logement de sorte que les capteurs s'étendent à l'intérieur du logement pour interagir avec l'extrémité de la barre.

2. Poignée de commande haptique selon la revendication 1, dans laquelle le logement (7) du support est traversant, l'extrémité de la barre entrant dans le logement par une ouverture proximale, tandis que la carte à circuit imprimé (16) est rapportée sur le support au niveau d'une ouverture distale de façon à former un fond du logement.

3. Poignée de commande haptique selon la revendication 1, dans laquelle les capteurs de force (17,18A,18B,19A,19B) sont reçus de manière amovible sur les cartes à circuit imprimé (16).

4. Poignée de commande haptique selon la revendication 3, dans laquelle au moins l'une des cartes à circuit imprimé comporte un microcontrôleur (21) programmé pour, lors d'une mise sous tension, identifier les capteurs de force (17,18A,18B,19A,19B) installés sur les cartes à circuit imprimé.

5. Poignée de commande haptique selon la revendication 1, dans laquelle un des capteurs de force (17) a une partie sensible en appui contre la carte à circuit imprimé pour être sensible à une action sur la barre de manœuvre selon un axe longitudinal (X) de celle-ci, ou contre un flanc du logement (7) pour être sensible à une action sur la barre de manœuvre selon un axe transversal (Y,Z) de celle-ci.

6. Poignée de commande haptique selon la revendication 1, dans laquelle au moins une extrémité de la barre de manœuvre comporte des plots (10,11A,11B,12A,12B) en caoutchouc naturel ou synthétique s'étendant en regard des capteurs de force.

7. Poignée de commande haptique selon la revendication 6, dans laquelle l'extrémité de la barre de manœuvre est conformée en téton (6) de sorte que les plots s'étendent dans des cavités ménagées dans le téton, une bague (23;26) étant enfilée sur le téton, la bague comportant une collerette (24;27) s'étendant en regard d'une face du support pour délimiter une course longitudinale de la barre dans les supports et des facettes latérales (25) s'étendant en regard de flancs du logement du support pour délimiter une course latérale de la barre dans les supports.

8. Poignée de commande selon la revendication 1, dans laquelle la barre de manœuvre (3) comporte un tube de préhension (9) monté tournant selon un axe longitudinal (X) de la poignée.

9. Poignée de commande haptique selon la revendication 1, dans laquelle l'une des cartes à circuit imprimé (16) comporte un émetteur infrarouge (30) pour émettre un rayonnement infrarouge en direction d'un récepteur infrarouge porte par l'autre des cartes à circuit imprimé (16), les rayonnements s'étendant parallèlement à la barre de ma-nœuvre (3) pour être interrompu par la main de l'utilisateur quand celui-ci saisit la barre de manœuvre.

10. Chariot équipé de plusieurs poignées de commande haptiques selon l'une des revendications précédentes, les poignées étant reliées entre elles en série et reliées à une unité de commande (103).
